# EUROPEAN PATENT APPLICATION

(11) **EP 2 786 663 A1**
(43) Date of publication of application: **08.10.2014**
(21) Application number: 12853320.5
(22) Date of filing: 30.11.2012
(51) Int. Cl.: A23P 1/04, A23K 1/18

(54) **MICROENCAPSULATED FOOD COMPOSITION FOR FISH LARVAE AND METHOD FOR OBTAINING SAME BY SPRAY DRYING**

(30) Priority: 30.11.2011 CL 30252011
(71) Applicant: Universidad Arturo Prat, 1110939 Iquique (CL)
(72) Inventor: CASTRO DIAZ, Raul, Santiago (CL); ROMAN SANPEDRO, Patricio, Santiago (CL); BRINTRUP GALINDO, Elisabeth, Santiago (CL)
(74) Representative: Stiebe, Lars Magnus
(86) International application number: PCT/CL2012/000070
(87) International publication number: WO 2013/078571

(57) **Abstract**

The invention relates to a novel method for the production of inert foodstuffs for feeding fish larvae. Thus, the inventors of the present application have developed a novel and effective method which comprises the steps of: a) selecting the inputs and formulation; b) micronizing; c) mixing and preparing the emulsion; d) microencapsulating; and e) storing the microcapsules. The microencapsulated composition (10 to 140 µm) thus obtained has very good stability, high buoyancy and low leaching. In addition, said microcapsules can be aggregated in order to generate larger granules (200 to 800 µm) for the larvae of larger fish species.

## Description

The invention relates to a novel method for the production of inert foodstuff for feeding fish larvae.

Thus, the inventors of the present application have developed a novel and effective method which comprises the steps of a) selecting the row materials and formulation; b) micronizing; c) mixing and preparing the emulsion; d) microencapsulating; and e) storing the microcapsules.

The microencapsulated composition (10 a 140 µm), thus obtained, has very good stability, high buoyancy and low leaching.

In addition, said microcapsules can be aggregated in order to generate larger granules (200 a 800 µm) for the larvae of larger fish species.

### BACKGROUND OF THE INVENTION

The microcapsules are compact structures in which a substance is occluded in another substance, forming small particles, typically in the range of 5 to 5000 µm (Lachman et al., 1986).

There are different techniques for producing microcapsules, based on physical and chemical processes (spray drying, fluidized bed, centrifugal extrusion or rotational separation of suspensions) and (complex coacervation, interfacial polymerization, phases separation, in situ polymerization, centrifugal encapsulation).

In order to select the foodstuff to provide to the cultivation species, various factors should be taken into account, such as nutritional value, palatability, mobility and size (Hunter 1981). The size of the foodstuff should be proportional to the maximum aperture that they could have on their oral structure (FAO 1993).

The above mentioned factors are considered by Cahu et al 2001, in their publication referring to the replacement of live foodstuff by formulated diets with certain specificity and inert character; besides considering the size of the row materials, favoring feed digestibility by the fish. Information considered in the formulation of microencapsulated diets for first fish larvae stage, which is the objective of this project.

### DETAILED DESCRIPTION OF THE INVENTION

The object of the present invention corresponds to providing a novel method for the elaboration of inert foodstuff for feeding fish larvae, which require special consistent feeding in living organisms, such as microalgae, rotifers and/or artemia nauplii. Fish farming with this foodstuff produces lower mortality and higher growth, which is a very relevant aspect in the industry area.

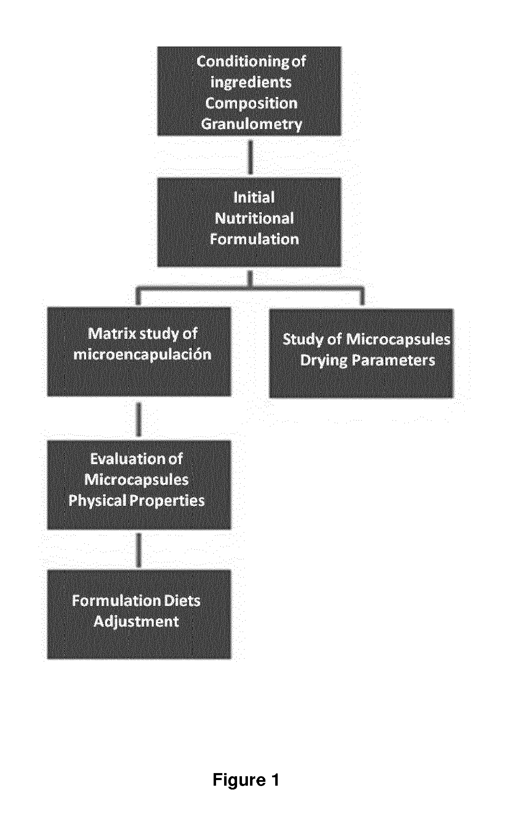

Thus, the inventors of the present application have developed a novel and effective method (Figure 1) which comprises the steps of:
a) Selecting the row materials and formulation.
b) Micronizing
c) Mixing and preparing the emulsion.
d) Microencapsulating
e) Storing the microcapsules.

The row materials required for the development of the microcapsules must be of satisfactory quality in terms of quality and nutritional profile (content of amino acids, fatty acids, vitamins, minerals and other trace elements, oxidation resistance, among others).

Micronized is performed such that the average particle size reaches 30 µm and sieving is highly homogeneous. The thus obtained formulation is prepared by an emulsion of oil in water; the water volume is determined by the required amount of mixture and the major proportion of particle sizes that are desired. Functional ingredients and oil are incorporated, which are mixed in a homogenizer at a temperature below 70°C. After verifying the stability of the emulsion is added to the mixture of nutritional ingredients in order to produce a continuous, homogeneous and stable emulsion of standardized viscosity.

For the microencapsulation, the emulsified product is dried by a "spray dryer" under specific conditions of feed flow of 1,23 l/h and air outlet temperature of 60 °C to obtain the shapes of microcapsules, which are particles of oily center, which are vacuum-packed in plastic bags at room temperature.

An important aspect of the present invention is that spray drying has been used for the microencapsulation, since it is the technique of easiest industrial escalation (Simon Benita, 2006). This technique involves the spray drying of an emulsion, containing nutritional ingredients with an array of functional ingredients, which give rise to microcapsules when the excess water evaporates. Nutritional ingredients provide the nutrients required by fish larvae in each of its stages of development.

The functional ingredients allow the creation of the cover that forms and protects the microcapsule. Further, infers directly in the physical and chemical properties of the particles.

In another aspect of the invention, one of the main issues addressed, is related to the need for greater homogeneity in the composition of the microcapsules to ensure that each constitutes a balanced nutritional contribution to larvae. As such, an undesirable scenario is that the composition of the capsules significantly differs from one another, reaching a composition formulated only in the average. To achieve this goal it is essential that the particles of the ingredients are of small and uniform size.

Reducing the particle size of the ingredients of the present invention was a laborious task, as each of them presents distinct mechanical properties, which made it necessary to adapt the process conditions for each ingredient of the formula.

In another aspect of the invention, a main criterion in the development of the foodstuff was the need to adapt physical properties of the foodstuff to the predatory habits of the species. In this regard, it has been established that most of the larvae capture their foodstuff on the surface of water or in the water column, so that the buoyancy of the foodstuff and a low sink rate are important aspects. Regarding the size of the particles, most of the larvae have the ability to ingest particles of a size between 50 to 250 µm. The design criterion was to approach the 100 µm.

Another aspect of the invention is related to the adaptation of the encapsulation matrix in order to delimit the leaching phenomenon leading to water pollution.

Additionally, nutritional parameters were adjusted to the encapsulation matrix to comply with the requirements of the larvae.

Finally, another further important aspect of the invention is the incorporation of a new process called "granulation", the objective of this process is to increase the particle size to be used in the initial feeding of freshwater fish, which are of larger size, such as salmonids, and further expand the feeding window of marine fish. For this process, an equipment was designed and built, is also a physical process, adapting the fluidized bed technology. The process consists of binding or sticking the microcapsules through air pressure and temperature to reach 200 particles over 500 µm.

Undoubtedly, one of the most important aspects of the invention relates to the results obtained in the buoyancy of the particles, which marks an absolute difference with all studies related to this topic, since the foodstuff floats on the surface, plunges into the water column, resting on the bottom and "ascending" in the water column.

To measure the buoyancy of the particles, the required time was established so that the particles begin to precipitate (surface time) and to cover a distance of 17 cm, until the bottom of the test tube (descent time), under controlled conditions. The time the microcapsules spent at the bottom of the test tube, before rising again in the water column (bottom time), was also recorded. We worked with a 100 ml graduated test tube. These samplings were conducted with fresh water (6g/l of NaCl) and seawater (330/00), with a temperature of 10°C and 12°C, respectively; and in a total of 100 ml, corresponding to 17cm of water column. All this will be described extensively in the examples of the present invention.

The international patent literature describes some documents that seek to solve the same technical problem that the present invention, nevertheless, using different procedures and products than described in this application. In general terms, they do not refer to the technological process addressed in this application, do not refer to microencapsulated products but to microparticulate or pellets, do not have the special properties of buoyancy and ascension in the water column or the ability to prevent leaching into water.

As an example the following state of the art patents, in the prior art search can be highlighted. The patent CN101715900 (MICRO PARTICLE FEED FOR CULTIVATING JUVENILE SEA CUCUMBER AND PREPARATION METHOD THEREOF - UNIV DALIAN FISHERIES-) describes microparticle foodstuff for the cultivation of young Holothuidea (sea cucumber). The disclosed method includes mixing fish meal (15-20%), bean pulp (5-10%), Sargassum thunbergii powder (20-50%), marine mud (10-15%), seaweed powder (5-20%), yeast (5-10%) and vitamins (0.5-1%), then the coating with carboxymethylcellulose and wheat gluten (1: 1-3), vacuum drying and sieving particulate mixture of 100 to 500 microns. The technology used in the process is clearly different from the present invention, is not directed to fish and do not corresponds to a microencapsulated but microparticulate than does not prevent leaching.

The patent CN101518299 (FORMULATED HATCH FEED OF YOUNG PENAUS - ZHUHAI SHIHAI FEED CO LTD-) describes feedstuffs formulated for young penaus, containing white fishmeal (30-65%), fish oil (5-7%), fish meal steam (10-20%), squid visceral meal (3-10 %), soybean meal (2-10%), vitamins (0.5-3%), peanut meal (2-10%), mineral mixture (0.5 - 3%), plus phospholipids and astaxanthin.

The methodology used is ultramicroELISA pulverization. The product thus obtained is stable and of very good quality and price, promotes growth, improves survival rate and strengthens the resistance capacity of young penaus. With respect to the present invention, is a different technology to generate a raw commodity for fish and non-microencapsulated.

In the same way, patents CN1726802 (METHOD FOR PREPARAIN INTEGRAL SMALL-DIAMETER AQUATIC HARD-PARTICLE FEED - JINLIN HE), CN 1726802 (FORMULA OF TINY PELLET FOR FISHES IN BOTHID AND TRUE PLAICE, AND PREPARATION METHOD - HUANGHAI AQUATIC PRODUCT INST), ES2223505 (COMPLETE FEED FOR FISH LARVAE AND METHOD FOR PREPARING SAME - AGRONOMIQUE INST NAT RECH; IFREMER-), P200201435 y P9701152 (ALIMENTO MICROENCAPSULADO PARA LARVAS DE PECES MARINOS, PROCEDIMIENTO PARA SU ELABORACION, METODO DE UTILIZACIÓN -CONSEJO SUP. INVESTIG. CIENTÍFICAS), PCT/FR2000/001068 (ALIMENTO COMPLETO PARA LARVAS DE PECES Y PROCEDIMIENTO PARA SU PREPARACION - INRA & IFREMER-), US 6.623776 (COMPOSITE, PARTICULATE FEED FOR FRY OR LARVAE OF OTHER MARINE ORGANISMS AND METHOD OF MANUFACTURING THE STARTING FEED - NOR AQUA INNOVATION AS), JP 10-090893 (FINE PARTICLE FEED FOR FISCH LARVAE AND JUVENILE - MORINAGA MILK IND. CO. LTD. & TAIYO YUSHI KK.), P0477211 (PROCEDIMIENTO PARA LA PREPARACION DE UN ALIMENTO PARA ANIMALES ACUÁTICOS DIMINUTOS TALES COMO LARVAS DE PECES-UNILEVER NV.)

Moreover, the scientific literature shows through the document "DEVELOPMENT OF A NOVEL CASEIN-PROTAMINE BASED MICROPARTICLES FOR EARLY FEEDING OF FISH LARVAE: IN VITRO EVALUATION. J. MICROENCAPSUL 2007; 24(6): 505-514" microparticle generation for the same purposes as the present application, but using a different technological procedure and not achieving the required buoyancy in the present invention.

### EXAMPLES

The examples hereinafter described are incorporated by means of illustration only, to promote understanding of the specification and not meant to limit in any way the scope of claims that are requested.

### EXAMPLE 1. Description of raw material and preparation of the emulsion.

The nutritional characteristics of the components of the composition were validated according to the considered row material to fish diet, to adjust the formulations. The particle size distribution of each of the ingredients, by sieving, was studied to assess the need for conditioning. Graphs of particle size distribution to determine the predominant mechanism of reduction were analyzed, namely abrasion or fracture. On this basis the milling parameters were adjusted. The cycle times and dwell times were adjusted according to the temperature reached by the material inside the mill, in order to keep it below 60°C.

The emulsion is prepared from the nutrients mixtures of Example 1 and functional ingredients, evaluating different water temperatures between 10°C and 90 °C, for each of the mixtures, the best results are between 40 °C to 60 °C.

### EXAMPLE 2. Microencapsulation Process

The technique of microencapsulation includes spray drying of an emulsion of oil in water. The aqueous phase incorporates the functional ingredients that when dehydrated result in a biopolymers mantle that surrounds and encapsulates the oily phase, in which the liposoluble ingredients are dissolved. For drying the emulsion, droplets should contact with hot air. In this diet, the intake air temperature is adjusted between 150ºC and 200°C, according to the solution which is to be sprayed. The air flow is maintained at the maximum allowed by the drying equipment, in order to maximize the speed of the process. To achieve a good drying process is necessary to wait for the drying chamber, pneumatic transport lines and the cyclone reach a temperature higher than the wet bulb of the output current, in order to prevent condensation of evaporated water and the consequent product adhesion on the walls. This process usually takes about 15 to 30 minutes. Is expected the outlet temperature to reach between 70ºC to 90°C. The product feed to the sprinkler is made by a peristaltic pump, since it is very important to check the accuracy of the inflow. In this case, the flow rate should be maintained between 20 to 40 ml/min. When contacting with hot air, the emulsion droplets are dried. At that time, the sensible heat of the air is used in the evaporation of water droplets, so that the air temperature is significantly reduced. This is one of the main advantages of this drying technique, as exposure of the product to temperatures is extremely limited, which significantly reduces the degradation of heat sensitive components. Once equilibrium is reached, the air flow and particles are transported by pneumatic ducts to cyclone separation. In the cyclone, the particles are separated from the air stream. As the density of the particles is several orders of magnitude higher than the amount of air, these are projected onto the walls of the cyclone, in which contact are decelerated. Finally, the particles collapse and are collected in the container located under the lock of the cyclone, while the clean air stream is collected by the center, from where it is taken to the blower.

Subsequently, the microencapsulated foodstuff is collected and packed in plastic vacuum bags.

### EXAMPLE 3. Physico-Chemical Characterization of microcapsules

### a) Size of Microcapsules

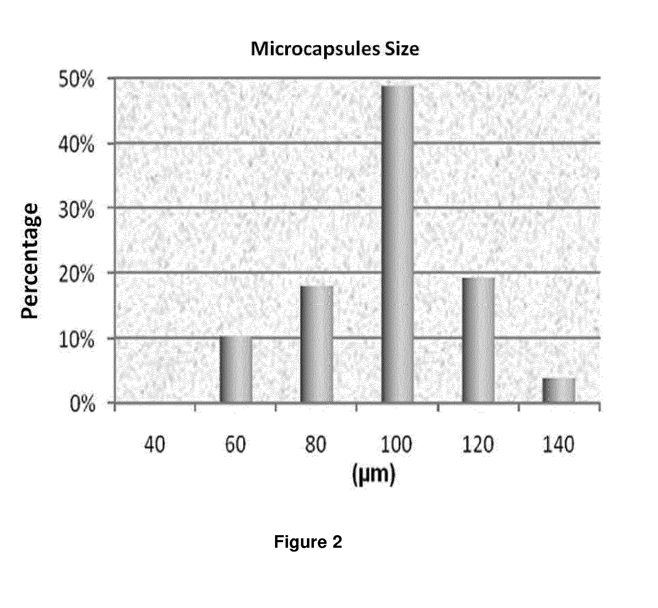

To determine the size of the microcapsules, smear diets were prepared by dispersing the microcapsules in oil or glycerine. Smears thus prepared and observed under transmitted light microscope and photographed at object 10X. By image analysis particle size was determined, by compared with a control of known size, using Moticam® software. To avoid bias in the photographs, a quartering of the surface of smear was performed, being chosen at least 25 fields of observation. With the assistance of Excel (Microsoft) a simple statistical analysis of the data collected to establish average and standard deviations of the samples was performed (Figure 2).

### b) Buoyancy

To measure the buoyancy of the particles, the required time was established for the particles begin to precipitate (surface time) and to cover a distance of 17 cm to the bottom of the test tube (descent time), under controlled conditions. The time the microcapsules spent at the bottom of the test tube was also recorded, before ascending again in the water column (bottom time). A 100 ml test tube was used. These samplings were conducted with fresh water (6 g/L NaCl) and seawater (330/00), with a temperature of 10°C and 12°C, respectively; and a total of 100 ml, corresponding to 17 cm of water column.

For microcapsules of 100 µm average, the surface time varies from 9 to 15 s, the descent time varies from 70 to 120 s, the bottom time varies from 30 to 60 s and the ascent time varies from 30 to 70 s.

### c) Leaching

To establish the level of leaching, a 10% ppm suspension of the microcapsules in distilled water was conducted. This suspension was subjected to vortex agitation during 1 min. The sample was then centrifuged 1000 rpm during 1 min and then the discard of particles that were dispersed and floating in the solution was proceeded. From these methods the mass of remaining product was determined, which was corrected for moisture (determined by thermo-balance). The calculated erosion of product was attributed to leaching of the microcapsules.

The obtained results ranged from 40 to 56% of reference, by which was defined that leaching of the foodstuff is significant. In the leaching test a partial dissolution of encapsulation matrices is evidenced, under the test conditions. However, it is not possible to establish the presence of lipids on the surface of the sample, which proves that they are occluded in the center of the microcapsules and not adsorbed on the particles, confirming the effective microencapsulation of the diets.

### EXAMPLE 4. Description of the formulation

The composition of the final microcapsule formulation is described in the following table, as an example.

**Table 1. Preferred composition of the formulation of the invention**

| **Component** | **Concentration Ranges (% p/p)** |
|---|---|
| **Alginate** | 0,5-1,5 |
| **Yeast** | 1,5-3,0 |
| **Serum** | 5,0-10,0 |
| **Starch** | 0,5-1,0 |
| **Fish oil** | 8,0-10,0 |
| **Fishmeal** | 56,0-64,0 |
| **Excipients** | 8,0-15,0 |

### EXAMPLE 5. Granulation Method and Physico-Chemical Characterization.

A new process called "granulation" was designed and incorporated. The objective of this process is to increase the particle size to be used in the initial feeding of freshwater fish, which are of larger size, such as salmonids, and further expand the feeding window of marine fish. For this process, an equipment was designed and built, is also a physical process, adapting the fluidized bed technology. The process consists of binding or sticking the microcapsules through air pressure and temperature to reach 200 particles over 500 µm.

When the microcapsules samples were dried, the standardization process and equipment performance designed was started.

The parameters considered correspond to the air pressure, temperature, type and concentration of binding agent and finally the time of permanence of the microcapsules in the granulating machine.

### a) Size of granulated foodstuff

To determine the size of granulated foodstuff based on microcapsules, smear diets were prepared by dispersing the microcapsules in oil or glycerine. Smears thus prepared and observed under transmitted light microscope and photographed at object 10X. By image analysis particle size was determined, by compared with a control of known size, using Moticam® software. To avoid bias in the photographs, a quartering of the surface of smear was performed, being chosen at least 25 fields of observation. With the assistance of Excel (Microsoft), a simple statistical analysis of the data collected to establish average and standard deviations of the samples was performed.

Regarding the results of the granulate, of the 50 grams used by process, a 60% of the sample within the range of 200-300 microns is obtained, similar to starter extruded commercial foodstuff (st) 0.0 used the first 20 days of first feeding on salmonids and 40% of the product is larger than 425 microns in size, which corresponds to extruded commercial foodstuff st 0, used for 15 days after the starter (st) 0.0. These particle sizes can expand the feeding window in marine fish larvae, in order to start with the first feeding with the microencapsulated foodstuff ( 100 microns average) to continue with the granulate of 300 microns average and then 425 microns average. The advantage of this process is that it can maintain the physical and chemical properties of the initial microencapsulated foodstuff without altering its composition.

### b) Buoyancy

To measure the buoyancy of the particles, the required time was established for the particles begin to precipitate (surface time) and to cover a distance of 17 cm to the bottom of the test tube (descent time), under controlled conditions. The time the microcapsules spent at the bottom of the test tube was also recorded, before ascending again in the water column (bottom time). A 100 ml test tube was used. These samplings were conducted with fresh water (6 g/L NaCl) and seawater (330/00), with a temperature of 10°C and 12°C, respectively; and a total of 100 ml, corresponding to 17 cm of water column.

The samples were sieved to obtain two size ranges: 300 and 425 µm, and times were recorded in seconds, as shown in the following table:

**Table 2: Characterization of Buoyancy**

| | **300 µm** | **425 µm** |
|---|---|---|
| **Surface Time (s)** | 4,6 | 14,4 |
| **Descent Time (s)** | 29,0 | 25,0 |
| **Bottom Time (s)** | 96,2 | 174,6 |
| **Ascent Time(s)** | 82,2 | 25,0 |

### c) Leaching

To establish the level of leaching, a 10% ppm suspension of the microcapsules in distilled water was conducted. This suspension was subjected to vortex agitation during 1 min. The sample was then centrifuged 1000 rpm during 1 min and then the discard of particles that were dispersed and floating in the solution was proceeded. From these methods the mass of remaining product was determined, which was corrected for moisture (determined by thermo-balance). The calculated erosion of product was attributed to leaching of the granulated microcapsules.

The results were similar to those obtained with the microcapsules, except that the microcapsules agglutinated in the granulation process remain compacted, preventing become detached, which is very important for feeding fish larvae of larger size.

All tests performed for granulated and microencapsulated foodstuff maintain the same chemical composition of the formulations after each process, where no significant differences in proximate analyzes, amino acids and fatty acid profiles exists. Figure 3 shows a microphotograph of the obtained foodstuff microcapsules. Figure 4 shows the structural organization of the granulator equipment used. Figure 5 shows the size distribution of the granulated foodstuff and Figure 6 shows a microphotograph of a granulated foodstuff obtained based on the microcapsules.

### EXAMPLE 6. Bioassays

Feeding tests were conducted with 2 fish species: sea silverside larvae (Odontesthes regia) fed 30 days with microencapsulated foodstuff and Atlantic salmon (Salmo salar) fed 45 days with granulated foodstuff.

### a) Bioassay Results of Sea Silverside

Larval survival values obtained with the microencapsulated diets developed in the present invention, for the first 30 days of culture, indicate a value higher than 70%, with a significantly higher difference to that obtained with live diet feeding, which do not exceed 10%.

In the cultivation of this specie, like most marine fish, feeding should be done with live foodstuff, using green water and artemia nauplii. This increases production costs, having to develop parallel cultures and invest in infrastructure and manual labour. These auxiliary crops difficult industrial escalation in the culture of marine fish.

In terms of growth rates, no significant differences in weight of larvae fed with microencapsulated foodstuff and live diet were found.

As a conclusion, we can state that the larvae of sea silverside accept the microencapsulated foodstuff since starting their first feeding, without needing to add any live foodstuff as is currently done in the cultivation of marine fish with indirect ontogeny, using green water, rotifers and / or artemias for larvae cultivation (microalgae). Accordingly, the initial feed for fish larvae tested in the sea silverside, is able to replace live foodstuff (artemias), improving the survival and growth of larvae in a period of 30 days, considered the most critical period of an fish intensive cultivation.

### a) Bioassay Results of Atlantic salmon:

Larvae survival values obtained with granulated diets, based on microcapsules, developed with this invention for the first 45 days of culture, indicate a value greater than 98%, not existing significant differences with the traditional diet based on extruded inert diet (over 97%). Regarding growth rates, no significant difference in the weight of larvae fed with microencapsulated feed and extruded inert diet were found. However, the conversion factor is lower in fish fed with diets based on microencapsulated feed, compared to fish fed with extruded inert diet, with a difference of 0.57. This is because less amount of foodstuff is lost due to the suspension nature of the foodstuff. When the inert foodstuff reaches the bottom, it gets lost and the fish no longer consumes it, but in the case of microcapsules based foodstuff, this reaches the bottom and fish movement generates its re-suspending, and the fish can consume it and can last 2 hours in this suspension dynamic. Importantly, this specie is kept in the pond bottom at the first feed. Another important quality of this foodstuff is that it does not generate fines (dust), therefore maintains a cleaner pond, which could improve health quality of fish.

### DESCRIPTION OF DRAWINGS

**Figure 1****.** Schematic representation of the general process of microencapsulation.
**Figure 2****.** Distribution of microcapsules size.

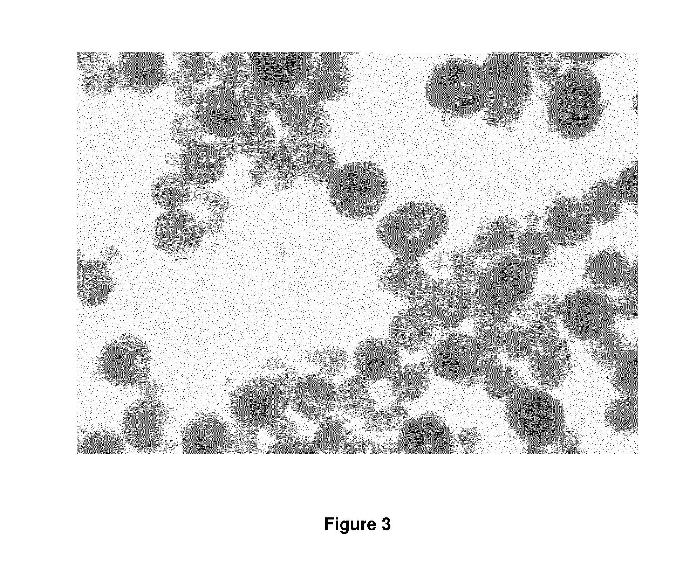

**Figure 3****.** Microphotograph of microcapsules for foodstuff.

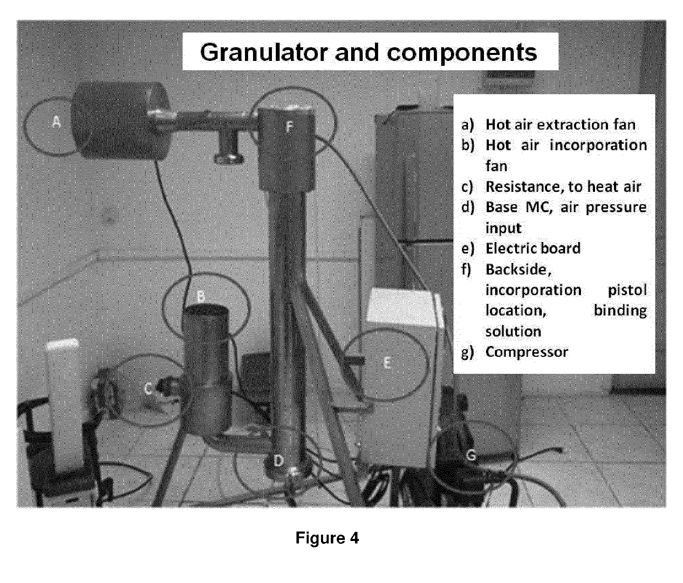

**Figure 4****.** Granulator equipment designed and built for increasing particle size using microcapsules as raw material.

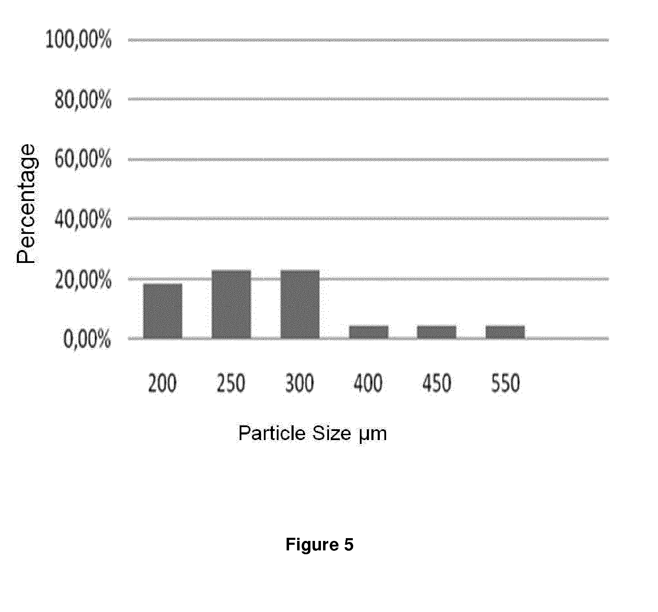

**Figure 5****.** Size distribution of granulated foodstuff based on microcapsules.

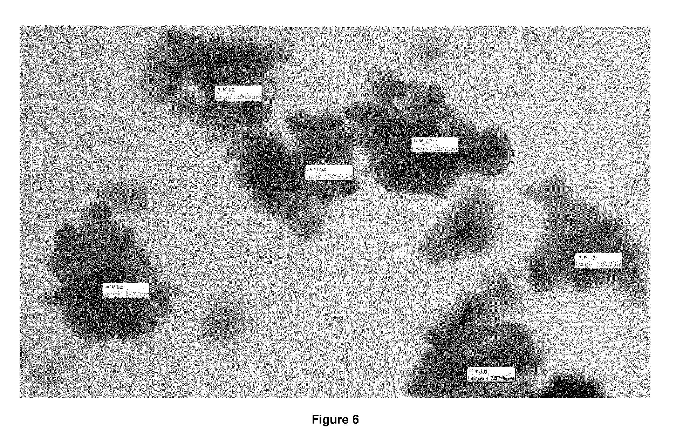

**Figure 6****.** Microphotograph of granulated foodstuff based on microcapsules

### BIBLIOGRAPHIC REFERENCES

### Most relevant scientific literature

- Cahu C. & Infante J, 2001. Substitution of live foodstuff by formulated diets in marene fish larvae. Aquaculture, 161-180 pp.
- F.A.O, 1993 I curso regional FAO de calidad de insumos y dietas acuicolas para Latinoamerica
- Hunter, J.R. 1981. Feeding ecology and predation of marine fish larvae. Marine fish larvae: morphology, ecology and relation to fisheries. Washington Sea grant program. Seattle. 34-77 pp
- Lachman, L., DeLuca, P. and Akers, MJ. (1986(. In: The Theory and Practice of Industrial Pharmacy 3rd Edn. (Lachman, L., Lieberman, HA. and Kanig, J.L., Eds.) Lea and Febiger, Philadelphia, chapter 26.
- Simon Benita. Microencapsulation: Methods and Industrial applications. Second Edition. Editorial Taylor & Francis, 2006.
- Cara B, Moyano FJ, Gander B, Yúfera M. Ddevelopment of a novel casein-protamine based microparticles for early feeding of fish larvae: in vitro evaluation. J. Microencapsul 2007; 24(6): 505-514.

### Relevant Patents

- CN 1726802 (HUANGHAI AQUATIC PRODUCT INST). FORMULA OF TINY PELLET FOR FISHES IN BOTHID AND TRUE PLAICE, AND PREPARATION METHOD.
- CN101518299 (ZHUHAI SHIHAI FEED CO LTD). FORMULATED HATCH FEED OF YOUNG PENAUS.
- CN101715900(UNIV DALIAN FISHERIES). MICRO PARTICLE FEED FOR CULTIVATING JUVENILE SEA CUCUMBER AND PREPARATION METHOD THEREOF
- CN1726802 (JINLIN HE). METHOD FOR PREPARATION INTEGRAL SMALL-DIAMETER AQUATIC HARD-PARTICLE FEED.
- ES2223505 (AGRONOMIQUE INST NAT RECH; IFREMER). COMPLETE FEED FOR FISH LARVAE AND METHOD FOR PREPARING SAME.
- JP 10-090893 (MORINAGA MILK IND. CO. LTD. & TAIYO YUSHI KK.). FINE PARTICLE FEED FOR FISCH LARVAE AND JUVENILE.
- P0477211 (UNILEVER NV.). PROCEDIMIENTO PARA LA PREPARACION DE UN ALIMENTO PARA ANIMALES ACUÁTICOS DIMINUTOS TALES COMO LARVAS DE PECES.
- P200201435 (CONSEJO SUP. INVESTIG. CIENTÍFICAS). ALIMENTO MICROENCAPSULADO PARA LARVAS DE PECES MARINOS, PROCEDIMIENTO PARA SU ELABORACION.
- P9701192 (CONSEJO SUP. INVESTIG. CIENTÍFICAS). ALIMENTO MICROENCAPSULADO PARA LARVAS DE PECES MARINOS, METODO DE UTILIZACIÓN.
- PCT/FR2000/001068 (INRA & IFREMER). ALIMENTO COMPLETO PARA LARVAS DE PECES Y PROCEDIMIENTO PARA SU PREPARACION.
- US 6.623776 (NOR AQUA INNOVATION AS). COMPOSITE, PARTICULATE FEED FOR FRY OR LARVAE OF OTHER MARINE ORGANISMS AND METHOD OF MANUFACTURING THE STARTING FEED.

## Claims

1. Fish foodstuff composition, **CHARACTERIZED by** being formed in microcapsules, or aggregates of these, which contain at least alginate (1.0 to 3.0% w/w) yeast (2.0 to 5.0% w/w, serum (5.0 to 15.0% w/w), fish meal (50.0 to 70.0% w/w) and other nutritionally acceptable excipients.

2. Fish foodstuff composition according to claim 1, **CHARACTERIZED by** containing alginate, preferably in a concentration of 0.5 to 1.5% w/w; yeast, preferably in a concentration of 1.5 to 3.0% w/w; serum, preferably in a concentration of 5.0 to 10% w/w fish meal, preferably in a concentration of 56 to 64% w/w.

3. Fish foodstuff composition according to claim 1, **CHARACTERIZED by** the microcapsules having a size between 10 and 140 µm.

4. Fish foodstuff composition according to claim 1, **CHARACTERIZED by** the microcapsules being essentially obtained by a process of spray drying from an emulsion.

5. Fish foodstuff composition according to claim 1 **CHARACTERIZED by** having high buoyancy and low leaching when applied in the fish pond.

6. Fish foodstuff composition according to claim 1, **CHARACTERIZED by** the aggregates of these microcapsules being obtained through a granulation process and form granules with particle sizes between 200 µm and 800 µm.

7. Method for obtaining a feed composition for fish according to claim 1, **CHARACTERIZED by** comprising the steps of:
a. Selecting the row materials and formulation
b. Micronizing
c. Mixing and preparing the emulsion
d. Microencapsulating
e. Storing the microcapsules

8. Method of claim 7, **CHARACTERIZED by** the micronized being performed by a highly homogeneous sieving.

9. Method of claim 7, **CHARACTERIZED by** the emulsion being prepared by mixing of the microparticles to obtain a stable emulsion and of standardized viscosity.

10. Method of claim 7, **CHARACTERIZED by** the microencapsulation being carried out by spray drying to a feed flow of 1.23 l/h and a temperature range of air outlet between 60 and 95°C.

11. Method of claim 7, **CHARACTERIZED by** to generate aggregates or granules of microcapsules, a granulation process, consisting of binding or sticking the microcapsules is added, through air pressure and temperature to reach 200 particles over 500 µm in a fluidized bed adapted for such purpose.

12. Use of the composition of claim 1, **CHARACTERIZED by** being used to prepare a foodstuff for larvae of fish in industrial production.

13. Use of the composition of claim 12, **CHARACTERIZED by** serving to prepare a foodstuff for fish larvae of small species.

14. Use of the composition of claim 12, **CHARACTERIZED by** serving to prepare a foodstuff for fish larvae of larger species.

15. Use of the composition of claim 13, **CHARACTERIZED by** the preferred small specie being the silverside *(Odontesthes regia*).

16. Use of the composition of claim 14, **CHARACTERIZED by** the preferred larger specie being the salmonids.

17. Use of the composition of claim 16, **CHARACTERIZED by** the preferred larger specie of salmonids being the *Salmo salar.*
